# EUROPEAN PATENT SPECIFICATION

(11) **EP 3 171 140 B1**
(45) Date of publication and mention of the grant of the patent: **18.09.2019**
(21) Application number: 15821298.5
(22) Date of filing: 07.07.2015
(51) Int. Cl.: G01G 19/393, G01G 13/02, G01G 13/00, G01G 19/387

(54) **COMBINATION WEIGHING DEVICE**
KOMBINATIONSWIEGEVORRICHTUNG
DISPOSITIF DE PESAGE ASSOCIATIF

(30) Priority: 18.07.2014 JP 2014148046
(43) Date of publication of application: 24.05.2017
(73) Proprietor: Ishida Co., Ltd., Kyoto-shi, Kyoto 606-8392 (JP)
(72) Inventor: OTOSHI Hiroki, Ritto-shi, Shiga 520-3026 (JP); IWASA Seisaku, Ritto-shi, Shiga 520-3026 (JP)
(74) Representative: Lang, Johannes
(86) International application number: PCT/JP2015/069512
(87) International publication number: WO 2016/009895

(56) References cited:
- EP-A2- 2 116 823
- JP-A- 2008 537 099
- JP-A- 2011 209 156
- JP-U- H 055 724
- JP-U- H 055 724
- JP-U- H0 159 831

## Description

### Technical Field

The present invention relates to a combination weighing apparatus.

### Background Art

The patent literature 1 discloses a combination weighing apparatus. This combination weighing apparatus includes a distributing portion that rotates to convey a weighed object outward, a plurality of conveying portions arranged in a radial manner along a circumference of the distributing portion and convey the weighed object discharged from the distributing portion by a rotating screw, a plurality of hoppers that are provided corresponding to each conveying portion and receive the weighed object discharged from the conveying portion, and a plurality of weighing hoppers arranged below the plurality of hoppers.

JP H05 5724 U (Anritsu Corp.), 26 January 1993 (1993-01-26), relates to a dispersing feed equipment, with a plurality of conveying routes distributing a product.

### Citation List

### Patent Literature

Patent Literature 1: Japanese Unexamined Patent Publication No. 2014-509290

### Summary of Invention

### Technical Problem

When the distributing portion conveys a weighed object, the weighed object may enter an inside of the distributing portion. In particular, in a case of weighed object having adhesiveness such as meat, when entering the inside of the distributing portion, the weighed object is not conveyed by the conveying portion and remains. In a combination weighing apparatus, when the weighed object remains, maintainability is lowered due to necessity of an operation for removing the weighed object. For a combination weighing apparatus, therefore, it is required to prevent the weighed object from remaining.

The present invention is intended to provide a combination weighing apparatus that can prevent a weighed object from remaining according to claim 1.

### Solution to Problem

The combination weighing apparatus according to an aspect of the present invention includes a distributing portion that has a conveying face that conveys a weighed object and conveys the weighed object in a direction toward an outer edge portion of the conveying face and a plurality of conveying portions arranged in a radial manner along an outer edge portion of the distributing portion and convey the weighed object discharged from the distributing portion, in which the distributing portion is provided with a projecting portion lower than the conveying face in the outer edge portion of the conveying face.

The distributing portion included in the combination weighing apparatus is provided with the projecting portion lower than the conveying face in the outer edge portion of the conveying face. This projecting portion makes it difficult for the weighed object to enter the inside of the distributing portion. As a result, the combination weighing apparatus can prevent the weighed object from remaining.

In an embodiment, the projecting portion may have a first extending portion that extends downwardly from the outer edge portion of the conveying face and a second extending portion that extends from a lower end portion of the first extending portion to the inside of the distributing portion. This makes it more difficult for the weighed object to enter the inside of the distributing portion.

In an embodiment, the projecting portion may have a connecting portion that connects the second extending portion with the inside face of the distributing portion. This ensures a rigidity of the projecting portion. As a result, damage or the like of the projecting portion can be prevented.

In an embodiment, a first spacer member arranged in a position opposite to a side face of an outside of the first extending portion may be provided. This allows the first spacer member to fill a gap if there is the gap generated between the projecting portion and a member arranged in a position opposite to the projecting portion. Therefore, the first spacer member can prevent the weighed object from entering the gap. Consequently, the combination weighing apparatus can prevent the weighed object from remaining.

In an embodiment, a second spacer member arranged in a position opposite to a bottom face of the second extending portion is provided and the bottom face of the second extending portion may contact a top face of the second spacer member. By thus contacting the second extending portion with the second spacer member, the weighed object becomes more difficult to enter the inside of the distributing portion.

In an embodiment, a third spacer member arranged in a position opposite to a side face of an inside of the connecting portion may be provided. This makes it more difficult for the weighed object to enter the inside of the distributing portion.

In an embodiment, the distributing portion may convey the weighed object by rotating. In a case where the distributing portion rotates, the weighed object is liable to be pulled into the inside by the rotation of the distributing portion and remains. Since the distributing portion includes the projecting portion, it can prevent the weighed object from being pulled. Therefore, the projecting portion is particularly effective in a configuration in which the distributing portion rotates.

In an embodiment, the conveying portion may convey the weighed object by the rotating screw. This enables the conveying portion to securely convey the weighed object that has a variety of forms.

In an embodiment, the weighed object may have adhesiveness. In a case where the weighed object has adhesiveness, the weighed object is in particular liable to remain because it adheres to the inside of the distributing portion when entering the inside of the distributing portion. Therefore, the configuration of the distributing portion that has the projecting portion is effective particularly in a case of weighing the weighed object that has adhesiveness. It is to be noted that the weighed object that has adhesiveness includes meat.

### Advantageous Effects of Invention

The present invention can prevent the weighed object from remaining.

### Brief Description of Drawings

FIG. 1 is a schematic perspective view of a combination weighing apparatus according to an embodiment.
FIG. 2 is a schematic perspective view in a case where a guide ring of the combination weighing apparatus illustrated in FIG. 1 is omitted.
FIG. 3 is a perspective view illustrating a distributing table and a conveying portion.
FIG. 4 is a perspective view illustrating the conveying portion.
FIG. 5 is a perspective view illustrating the guide ring.
FIG. 6 is an upper view of the combination weighing apparatus illustrated in FIG. 1.
FIG. 7 is a view illustrating a cross sectional configuration of an outer edge portion of the distributing table.
FIG. 8 is a view illustrating a cross sectional configuration of the distributing table and a guide block.
FIG. 9 is a view illustrating a cross sectional configuration of the distributing table and the conveying portion.
FIG. 10 is a view illustrating a cross sectional configuration of the outer edge portion of the distributing table according to another embodiment.
FIG. 11 is a view illustrating a cross sectional configuration of the distributing table and the conveying portion according to another embodiment.
FIG. 12 is a view illustrating a cross sectional configuration of the distributing table and the conveying portion according to another embodiment.

### Description of Embodiments

A detailed description of a preferred embodiment of the present invention will now be given with reference to the drawings. It is to be noted that in the description of the drawings, identical or corresponding elements are designated by the same reference numerals and overlapping descriptions will be curtailed.

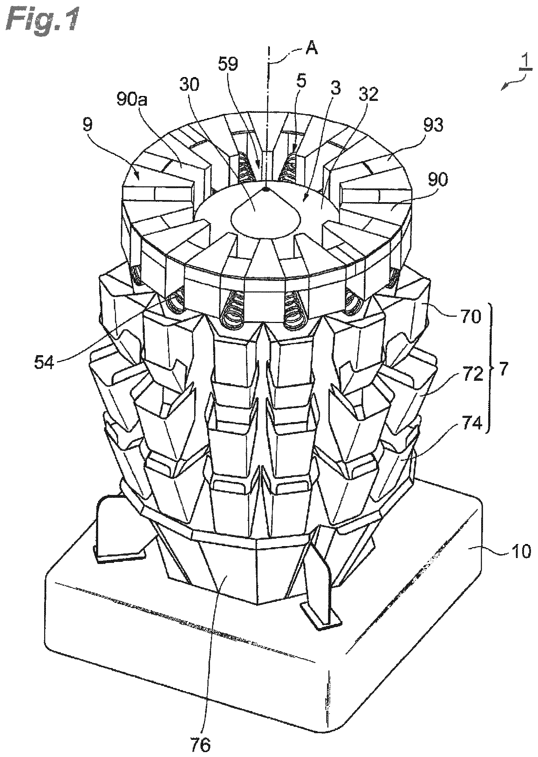

FIG. 1 is a schematic perspective view of a combination weighing apparatus according to an embodiment.

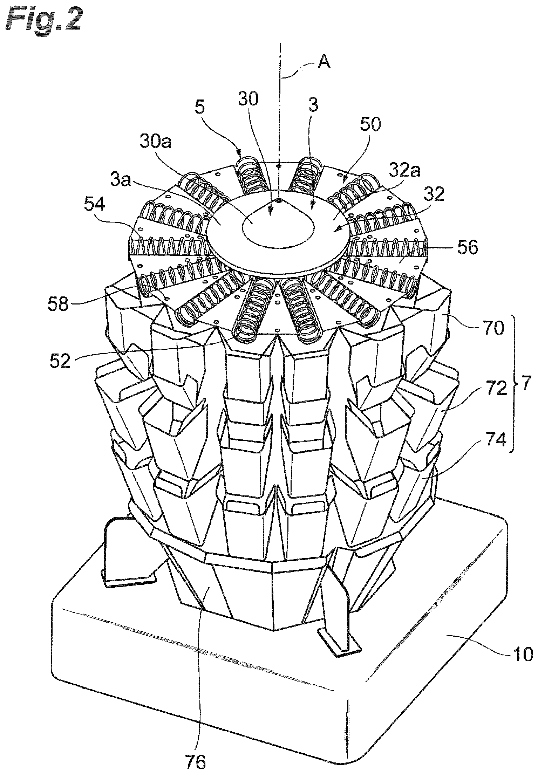

FIG. 2 is a schematic perspective view in a case where a guide ring of the combination weighing apparatus illustrated in FIG. 1 is omitted.

A combination weighing apparatus 1 illustrated in FIG. 1 and FIG. 2 weighs out the weighed object, each of which has a different mass, so that a total mass is within an acceptable range. Here, the weighed object includes raw meat such as beef, pork, and chicken. The combination weighing apparatus 1 of the present embodiment can preferably weigh articles having adhesiveness in particular.

As illustrated in FIG. 1 and FIG. 2, the combination weighing apparatus 1 includes a distributing table (distributing portion) 3, a plurality of conveying portions 5, a plurality of hoppers 7, and a guide ring 9. The distributing table 3, the conveying portions 5, the hoppers 7, and the guide ring 9 are supported by a frame 10.

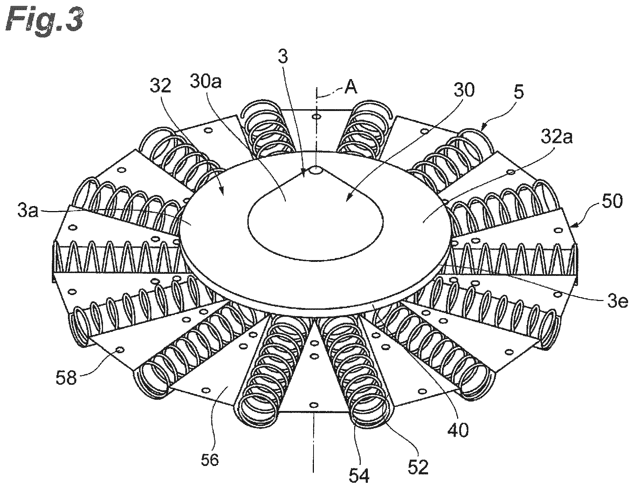

FIG. 3 is a perspective view illustrating the distributing table and the conveying portions. As illustrated in FIG. 1 to FIG. 3, the distributing table 3 is in a circular shape in a plan view. The distributing table 3 has a first distributing portion 30 and a second distributing portion 32. The first distributing portion 30 is in a cone shape with its center positioned at a central axis A. The first distributing portion 30 has a conveying face (outside face) 30a. The first distributing portion 30 is connected to the second distributing portion 32 on its bottom portion.

The second distributing portion 32 is in a shape of cone that has a vertex angle larger than that of the first distributing portion 30 whose vertex portion is removed. At a position that corresponds to the removed vertex portion, the second distributing portion 32 is connected to the first distributing portion 30. A conveying face 32a of the second distributing portion 32 is different in inclination from the conveying face 30a of the first distributing portion 30. Due to this, an inclination of a conveying face 3a of the distributing table 3 changes at a connection portion of the first distributing portion 30 and the second distributing portion 32.

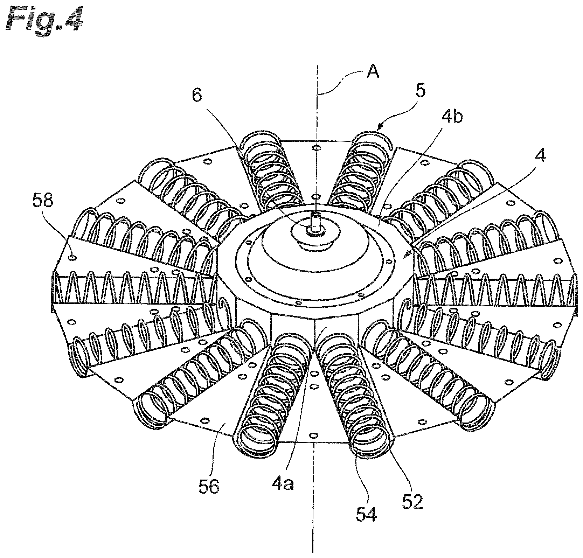

The distributing table 3 is attached to a rotating axis 6 (refer to FIG. 4) supported by a supporting portion 4 (refer to FIG. 4). The distributing table 3 is detachable with respect to the rotating axis 6. A motor that is not illustrated here drives the rotating axis 6. The distributing table 3 rotates (normal and reverse rotations) around the central axis A by the motor. By rotating around the central axis A, the distributing table 3 conveys (distributes) in a direction towards an outer edge portion 3e of the conveying face 3a of the distributing table 3 the weighed object that is fed on the distributing table 3.

FIG. 4 is a perspective view illustrating the conveying portion. As illustrated in FIG. 2 to FIG. 4, the conveying portion 5 is made up of a trough 52 and a screw 54 arranged in the trough 52. The plurality of troughs 52 are formed on a trough plate 50. The trough plate 50 is in a circular shape in a plan view. An inner diameter of the trough plate 50 is substantially equal to an outer diameter of the supporting portion 4 and is smaller than an outer diameter of the distributing table 3. An inner circumference edge of the trough plate 50 is positioned inward than the outer edge portion 3e of the distributing table 3 when seen from the above along the central axis A.

The trough 52 is a concave portion (concave shaped groove) in a semicircular column shape. The trough 52 is arranged in a radial manner from the center (the central axis A) of the trough plate 50. The trough 52 extends from the center to an outer edge of the trough plate 50.

Here, a connecting portion 56 that connects the troughs 52 is arranged between the troughs 52 adjacent to each other in a circumferential direction of the trough plate 50. The connecting portion 56 is in a triangle shape in which the inner circumference edge side is the vertex. In addition the connecting portion 56 has a flat face. Each of the connecting portions 56 has a plurality of (three in this case) engaging bosses 58 for engaging the guide ring 9.

The screw 54 is arranged in each of the troughs 52. By a motor (not illustrated) arranged inside a wall portion 4a corresponding to the trough 52 in the supporting portion 4, the screw 54 is driven and rotates. The conveying portion 5, which is made up of the trough 52 and the screw 54, is arranged in a radial manner along the outer edge portion 3e of the distributing table 3. Then the conveying portion 5 conveys along the trough 52 by the screw 54 that is rotating the weighed object discharged from the distributing table 3. An edge portion of the distributing table 3 side of the conveying portion 5 is an introducing portion 59 for the weighed object.

As illustrated in FIG. 1 and FIG. 2, the hopper 7 is provided corresponding to each of the conveying portions 5. Then the hopper 7 receives the weighed object that has been discharged from the conveying portion 5. More specifically, the hopper 7 includes a pool hopper 70, a weighing hopper 72, and a booster hopper 74. The pool hopper 70, the weighing hopper 72, and the booster hopper 74 are arranged in this order from an upper side to a lower side.

The pool hopper 70 temporarily holds the weighed object that has been discharged from the conveying portion 5. The weighing hopper 72 temporarily holds the weighed object that has been discharged from the pool hopper 70. The weighing hopper 72 is connected with a weighing apparatus that is not illustrated. Then this weighing apparatus weighs mass of the weighed object. The booster hopper 74 temporarily holds the weighed object that has been discharged from the weighing hopper 72. In the above, the set of the pool hopper 70, the weighing hopper 72, and the booster hopper 74 is arranged corresponding to each of the conveying portions 5.

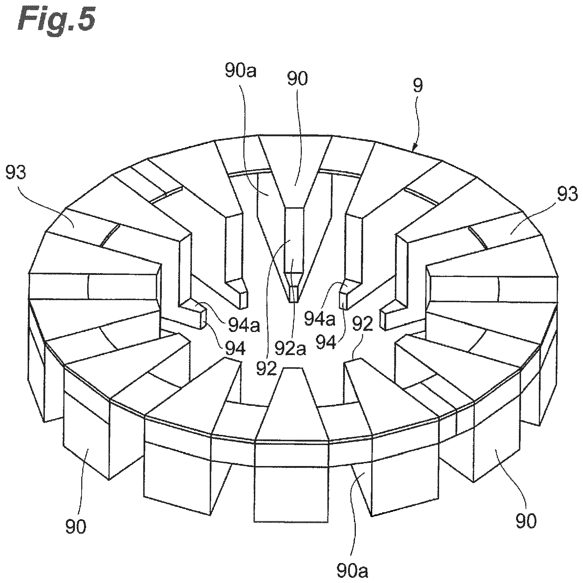

FIG. 5 is a perspective view illustrating the guide ring. As illustrated in FIG. 1 and FIG. 5, the guide ring 9 includes a plurality of guide blocks 90 arranged in a radial manner along the outer edge portion 3e of the distributing table 3. The guide block 90 is in a triangle shape that has an edge portion 92 (vertex portion) on the outer edge portion 3e side of the distributing table 3 in a plan view. Here, a connecting portion 93 connects the guide blocks 90 adjacent to each other. An edge face 92a of the edge portion 92 is a flat face. A lower portion of the edge portion 92 of the guide block 90 is provided with a projecting portion 94 that projects inward than the edge face 92a. An upper face 94a of the projecting portion 94 is a flat face.

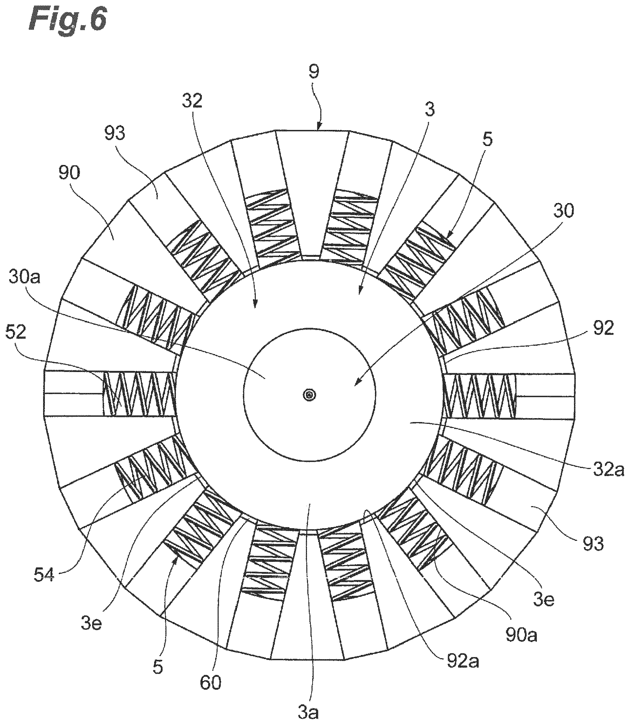

The guide block 90 is arranged on the connecting portion 56 of the trough plate 50. At this time, the engaging boss 58 of the connecting portion 56 is fitted in an engaging hole (not illustrated) provided on a bottom face of the guide block 90. As a result, the guide block 90 is engaged in the connecting portion 56 of the trough plate 50. After the guide ring 9 is arranged on the trough plate 50, the distributing table 3 is attached to the rotating axis 6. The projecting portion 94 of the guide block 90 is positioned inward than the outer edge portion 3e of the distributing table 3 when seen from the above along the central axis A. As illustrated in FIG. 6, there is a gap formed between the edge face 92a of the edge portion 92 of the guide block 90 and the outer edge portion 3e of the distributing table 3.

Since the guide block 90 is arranged on the trough plate 50, side walls 90a of the guide blocks 90 adjacent to each other form an area that has a width corresponding to a width of the trough 52 on each of the conveying portions 5. The edge portion 92 of the guide block 90 forms the introducing portion (introducing opening) 59 through which the weighed object to the conveying portions 5. This allows the weighed object that is conveyed by the distributing table 3 to be guided to the conveying portions 5 by the guide block 90 and thus introduced into the conveying portions 5.

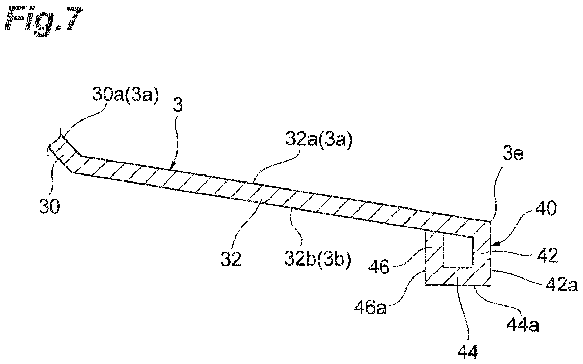

Subsequently, the configuration of the distributing table 3 will be described in detail. FIG. 7 is a view illustrating a cross sectional configuration of the outer edge portion of the distributing table. As illustrated in FIG. 7, the distributing table 3 is provided with a projecting portion 40. In the outer edge portion 3e of the conveying face 3a, the projecting portion 40 is arranged lower than the conveying face 3a. The projecting portion 40 is provided over the entire circumference of the outer edge portion 3e of the distributing table 3. The projecting portion 40 prevents the weighed object that is conveyed by the distributing table 3 from entering into the inside of the distributing table 3.

The projecting portion 40 includes a first extending portion 42, a second extending portion 44, and a connecting portion 46. The first extending portion 42 extends downward from the outer edge portion 3e of the conveying face 3a of the distributing table 3. The first extending portion 42 extends along the central axis A. The second extending portion 44 is provided in a lower end portion of the first extending portion 42. The second extending portion 44 extends from the lower end portion of the first extending portion 42 to the inside of the distributing table 3. The second extending portion 44 extends along a horizontal direction. The connecting portion 46 connects an edge portion inside of the second extending portion 44 with an inside face 3b (inside face 32b) of the distributing table 3 (second distributing portion 32). The connecting portion 46 extends at a substantially right angle with respect to the second extending portion 44 (along the central axis A).

In the present embodiment, a lower edge of the projecting portion 40 (a lower face 44a of the second extending portion 44) is at a same height as an upper face 4b of the supporting portion 4. A position of the lower edge of the projecting portion 40 may be set as appropriate in accordance with a design request desired by a designer.

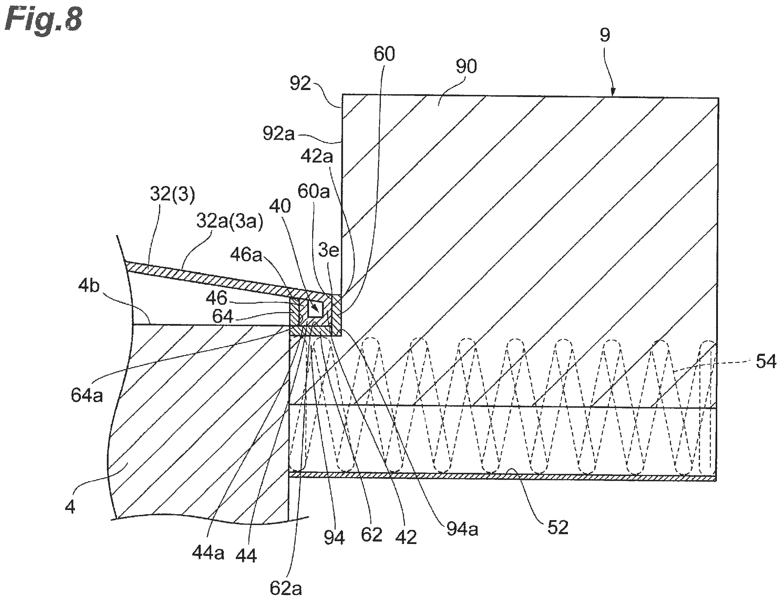

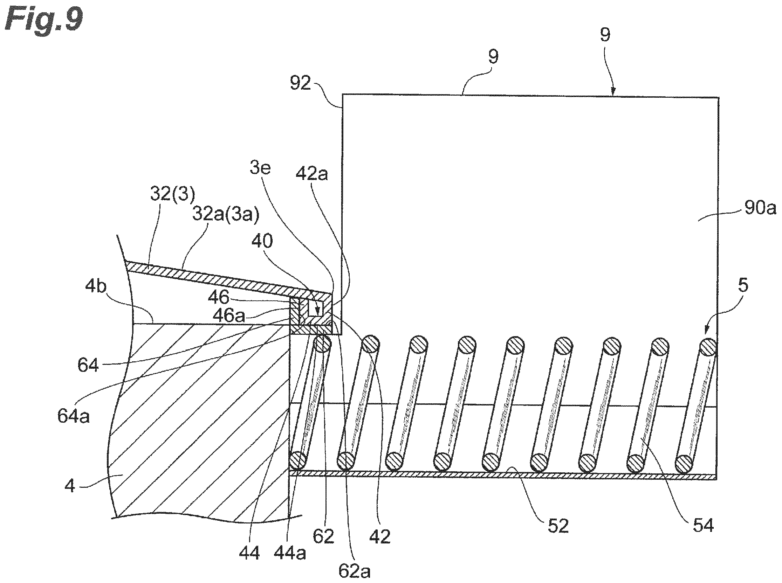

FIG. 8 is a view illustrating a cross sectional configuration of the distributing table and the guide block. FIG. 9 is a view illustrating a cross sectional configuration of the distributing table and the conveying portion. As illustrated in Fig. 8, a first spacer member 60 is arranged between a side face 42a outside the first extending portion 42 and the edge face 92a of the edge portion 92 of the guide block 90. The first spacer member 60 is a plate-like member. The first spacer member 60 is formed of, for example, an abrasion-resistant resin or the like. A side face 60a of the first spacer member 60 and the side face 42a of the first extending portion 42 contact each other. An upper edge portion of the first spacer member 60 is positioned at a height of the conveying face 3a in the outer edge portion 3e of the distributing table 3.

A second spacer member 62 is arranged between the lower face 44a of the second extending portion 44 and the upper face 94a of the projecting portion 94 of the guide block 90. The second spacer member 62 is a plate-like member. The second spacer member 62 is formed of, for example, an abrasion-resistant resin or the like. The second spacer member 62 is in a circular shape. That is, the second spacer member 62 is positioned in the conveying portion 5 and the guide block 90 as illustrated in FIG. 8 and FIG. 9. The second spacer member 62 is arranged on the projecting portion 94 of each of the guide blocks 90. As illustrated in FIG. 9, the second spacer member 62 is positioned above the screw 54 in the conveying portion 5. There is little gap formed between the second spacer member 62 and the screw 54. That is, an upper edge of the screw 54 and the upper face 94a of the projecting portion 94 of the guide block 90 are at the substantially same height. An upper face 62a of the second spacer member 62 and the lower face 44a of the second extending portion 44 contact each other.

A third spacer member 64 is arranged at a position opposite to a side face 46a inside the connecting portion 46. The third spacer member 64 is a plate-like member. The third spacer member 64 is formed of, for example, an abrasion-resistant resin or the like. The third spacer member 64 is in a circular shape. That is, the third spacer member 64 is positioned in the conveying portion 5 and the guide block 90. The third spacer member 64 is fixed to the second spacer member 62. A side face 64a of the third spacer member 64 and the side face 46a of the connecting portion 46 contact each other. When the distributing table 3 rotates, the projecting portion 40 slides with respect to the first spacer member 60, the second spacer member 62, and the third spacer member 64.

In the combination weighing apparatus 1, which has the above configuration, the weighed object (chicken for instance) is supplied by being dropped on a central portion of the distributing table 3 from above the distributing table 3. At this moment, the distributing table 3 is rotating driven by the motor. Due to this, the weighed object supplied to the distributing table 3 is conveyed towards the outer edge portion 3e of the distributing table 3 and discharged from the outer edge portion 3e of the distributing table 3. The weighed object discharged from the distributing table 3 is introduced to the conveying portion 5 through the introducing portion 59 of the conveying portion 5 while being guided by the guide block 90.

The weighed object introduced to the conveying portion 5 is conveyed along the trough 52 by the screw 54 that is intermittently driven by the motor and rotates. Then the weighed object is discharged from the conveying portion 5 so that it drops from an edge portion of the trough 52. The weighed object discharged from the conveying portion 5 is housed and temporarily held in the pool hopper 70 and then discharged from the pool hopper 70. The weighed object discharged from the pool hopper 70 is housed and temporarily held in the weighing hopper 72. At this moment, the weighing apparatus weighs a weight. After that, the weighed object discharged from the weighing hopper 72 is housed and temporarily held in the booster hopper 74.

Then, a computer calculates a combination of the hoppers 7 that realizes a weight value that matches a target weight (or a weight value that is the closest to a target weight) among all of the weighing hoppers 72 and the booster hoppers 74 that house the weighed object therein. The weighed object in one or a plurality of hoppers 7 that have been selected is discharged to a collecting chute 76. The weighed object collected to the collecting chute 76 is discharged towards a downstream apparatus that is not illustrated.

As described so far, in the combination weighing apparatus 1 of the present embodiment, the distributing table 3 is provided with the projecting portion 40 at a lower portion of the conveying face 3a in the outer edge portion 3e of the conveying face 3a. This projecting portion 40 makes it difficult for the weighed object to enter an inside of the distributing table 3. As a result, the combination weighing apparatus 1 can prevent the weighed object from remaining.

In the present embodiment, the projecting portion 40 includes the first extending portion 42 that extends downwardly from the outer edge portion 3e of the conveying face 3a and the second extending portion 44 that extends from the lower end portion of the first extending portion 42 to an inside of the distributing table 3. This makes it more difficult for the weighed object to enter the inside of the distributing table 3.

In the present embodiment, the projecting portion 40 includes the connecting portion 46 that connects the second extending portion 44 with the inside face 3b of the distributing table 3. This ensures a rigidity of the projecting portion 40. As a result, damage or the like of the projecting portion 40 can be prevented.

The present embodiment includes the first spacer member 60 arranged in a position opposite to the side face 40a of an outside of the first extending portion 42. This allows the first spacer member 60 to fill a gap if there is the gap generated between the first extending portion 42 and the edge portion 92 of the guide block 90 arranged in a position opposite to the first extending portion 42. Therefore, the first spacer member 60 can prevent the weighed object from entering the gap. Consequently, the combination weighing apparatus 1 can prevent the weighed object from remaining.

The present embodiment includes the second spacer member 62 arranged in a position opposite to the lower face 44a of the second extending portion 44. The lower face 44a of the second extending portion 44 and the upper face 62a of the second spacer member 62 are contacting each other. Thus, the second extending portion 44 and the second spacer member 62 contact each other; therefore, the weighed object is made more difficult to enter the inside of the distributing table 3.

The present embodiment includes the third spacer member 64 arranged in a position opposite to the side face 46a of an inside of the connecting portion 46. As illustrated in FIG. 8 and FIG. 9, the second spacer member 62 and the third spacer member 64 block an intrusion opening through which the weighed object intrudes between the upper face 4b of the supporting portion 4 and the distributing table 3. Therefore, the weighed object is made more difficult to enter the inside of the distributing table 3.

In the present embodiment, the distributing table 3 conveys the weighed object by rotating. In a case where the distributing table 3 rotates, the weighed object is pulled into the inside by the rotation of the the distributing table 3 and remains. Since the distributing table 3 includes the projecting portion 40, it can prevent the weighed object from being pulled. Therefore, the projecting portion 40 is particularly effective in the configuration in which the distributing table 3 rotates.

In the present embodiment, the conveying portion 5 conveys the weighed object by the screw 54 that rotates. This enables the conveying portion 5 to securely convey the weighed object that has a variety of forms. In particular, in a case where the weighed object has adhesiveness such as raw meat, it is preferably conveyed by the screw 54.

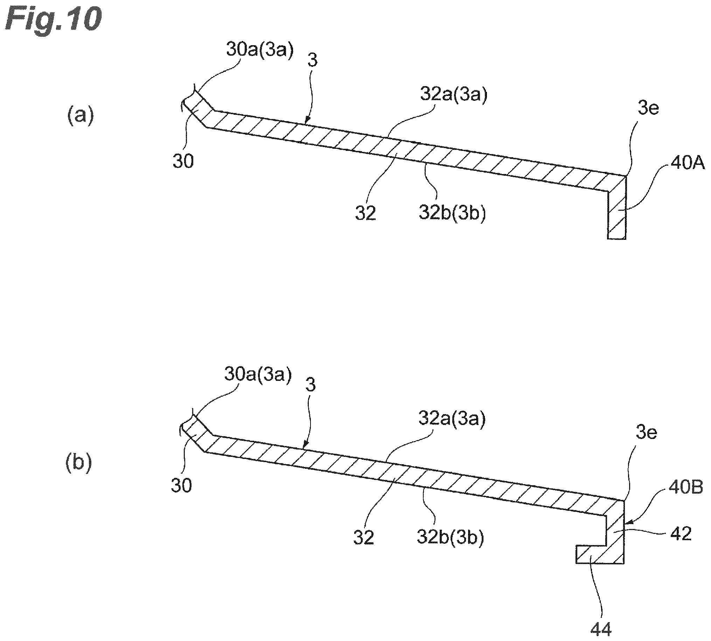

The present invention is not limited to the embodiments described above. While in the embodiment described above, the description has been made with an example of the form in which the projecting portion 40 includes the first extending portion 42, the second extending portion 44, and the connecting portion 46, the configuration of the projecting portion is not limited to it. As illustrated in FIG. 10(a), a projecting portion 40A extends downwardly from the outer edge portion 3e of the distributing table 3 and includes only a portion that corresponds to the first extending portion 42 of the embodiment described above. In other words, the second extending portion and the connecting part may not be provided. In addition, as illustrated in FIG. 10(b), a projecting portion 40B includes the first extending portion 42 and the second extending portion 44. In other words, the connecting part may not be provided.

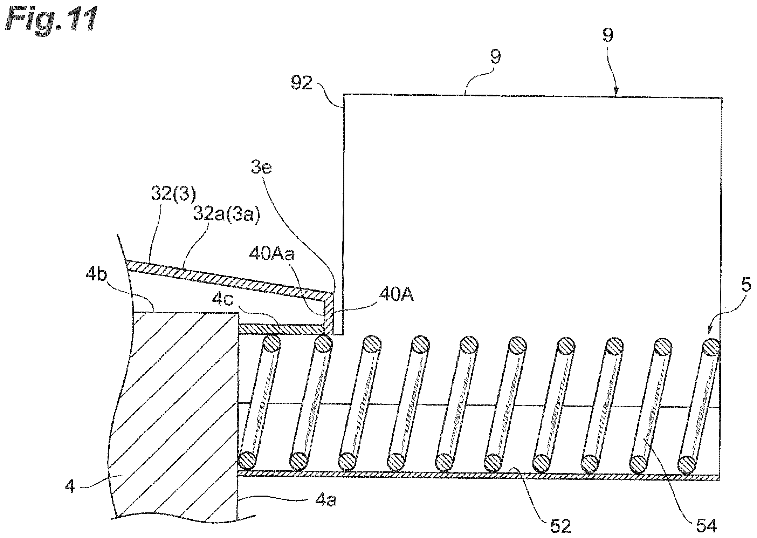

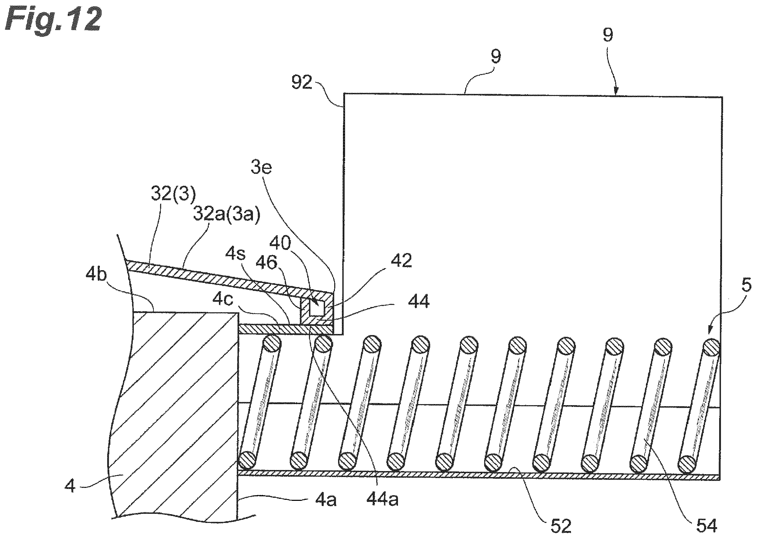

As illustrated in FIG. 11, the supporting portion 4 may be provided with an extending portion 4c that extends from the wall portion 4a to the projecting portion 40A. The extending portion 4c is fixed to the wall portion 4a of the supporting portion 4 and provided over the entire circumference of the supporting portion 4. A tip of the extending portion 4c contacts an inside face 40Aa of the projecting portion 40A. In accordance with this configuration, the projecting portion 40A and the extending portion 4c make it difficult for the weighed object to enter the inside of the distributing table 3. In addition, as illustrated in FIG. 12, the extending portion 4c may be provided in a configuration in which the distributing table 3 includes the projecting portion 40 of the embodiment described above. In this case, the extending portion 4c may be provided so that the lower face 44a of the second extending portion 44 contacts an upper face 4s of the extending portion 4c.

In the embodiment described above, the description has been made with an example of the form in which the upper edge portion of the first spacer member 60 is positioned at a height of the conveying face 3a in the outer edge portion 3e of the distributing table 3. However, the upper edge portion of the first spacer member 60 may be positioned above the conveying face 3a in the outer edge portion 3e of the distributing table 3 or may be positioned below the conveying face 3a.

In the embodiment described above, the description has been made with an example of the form in which the first extending portion 42 extends along the central axis A. However, the first extending portion 42 may incline with respect to the central axis A. The second extending portion 44 may also incline with respect to a horizontal direction.

In the embodiment described above, the description has been made with an example of the form in which the distributing table 3 rotates about the central axis A so that the weighed object is conveyed towards the outer edge portion 3e. However, the distributing table 3 may be in a form in which the weighed object is conveyed towards the outer edge portion 3e by vibration.

In the embodiment described above, the description has been made with an example of the form in which the weighed object is conveyed by the screw 54 in the conveying portion 5. However, a conveying method in the conveying portion 5 may be another method.

In the embodiment described above, the description has been made with an example of the form in which the guide blocks 90 are connected with each other by the connecting portion 93 in the guide ring 9. However, the guide blocks 90 may not be connected with each other.

While in the embodiment described above, the description has been made with an example of the form in which the distributing table 3 includes the first distributing portion 30 and the second distributing portion 32, the configuration of the distributing table 3 is not limited to it.

In the embodiment described above, the description has been made with an example of the form in which the first spacer member 60, the second spacer member 62, and the third spacer member 64 are formed of an abrasion-resistant resin or the like. However, the first spacer member 60, the second spacer member 62, and the third spacer member 64 may be made up of another material with the surfaces of the first spacer member 60, the second spacer member 62, and the third spacer member 64 being coated with an abrasion-resistant material. It is more preferred that a coating material has a small coefficient of friction.

### Reference Signs List

1: combination weighing apparatus, 3: distributing table (distributing portion), 3a: conveying face, 3e: outer edge portion, 5: conveying portion, 40, 40A, 40B: projecting portion, 42: first extending portion, 42a: side face, 44: second extending portion, 44a: lower face, 46: connecting portion, 46a: side face, 54: screw, 60: first spacer member, 62: second spacer member, 62a: upper face, 64: third spacer member

## Claims

1. A combination weighing apparatus (1), comprising:
a distributing portion (3) with an upper side and a lower side, that includes a conveying face (3a) on the upper side of the distributing portion (3) which conveys a weighed object in a direction towards an outer edge portion (3e) of the conveying face (3a);
a plurality of conveying portions (5) arranged in a radial manner from a central axis (A) passing through a center of the distributing portion (3) and extending in a vertical direction along the outer edge portion (3e) of the distributing portion (3) and convey the weighed object discharged from the distributing portion (3); and
a guide ring (9) having a plurality of guide blocks (90) arranged in a radial manner from the central axis (A) along the outer edge portion (3e) of the distributing portion (3),
wherein the distributing portion (3) is provided with a projecting portion (40) lower than the conveying face (3a) in the outer edge portion (3e) of the conveying face (3a), and
the plurality of guide blocks (90) each have an end surface extending along the central axis at an end portion of the distributing portion (3), and
the projecting portion (40) is arranged at a position opposing the end surface of each of the plurality of guide blocks (90).

2. The combination weighing apparatus (1) according to claim 1, wherein the projecting portion (40) includes a first extending portion (42) that extends downwardly from the outer edge portion (3e) of the conveying face (3a) and a second extending portion (44) that extends from a lower end portion of the first extending portion (42) to an inside of the distributing portion (3).

3. The combination weighing apparatus (1) according to claim 2, wherein the projecting portion (40) includes a connecting portion (46) that connects the second extending portion (44) with an inside face (3b) of the distributing portion (3).

4. The combination weighing apparatus (1) according to claim 2 or 3, comprising a first spacer member (60) arranged in a position opposite to a side face of an outside of the first extending portion (42).

5. The combination weighing apparatus (1) according to any one of claims 2 to 4, comprising a second spacer member (62) arranged in a position opposite to a lower face of the second extending portion (44), wherein the lower face of the second extending portion (44) and an upper face of the second spacer member (62) contact each other.

6. The combination weighing apparatus (1) according to claim 3, comprising a third spacer member (64) arranged in a position opposite to a side face of an inside of the connecting portion (46).

7. The combination weighing apparatus (1) according to any one of claims 1 to 6, wherein the distributing portion is configured to convey the weighed object by rotating.

8. The combination weighing apparatus (1) according to any one of claims 1 to 7, wherein the conveying portion is configured to convey the weighed object by a screw that rotates.

9. The combination weighing apparatus (1) according to any one of claims 1 to 8, further configured to be used for weighed object which have adhesiveness.

## Patentansprüche

1. Kombinationswiegevorrichtung (1), umfassend:
einen Verteilungsabschnitt (3) mit einer oberen Seiten und einer unteren Seite, die eine Förderfläche (3a) auf der oberen Seite des Verteilungsabschnitts (3) beinhaltet, die ein gewogenes Objekt in eine Richtung zu einem äußeren Randabschnitt (3e) der Förderfläche (3a) befördert;
eine Vielzahl von Förderabschnitten (5), die auf eine radiale Weise von einer zentralen Achse (A) angeordnet sind, die durch ein Zentrum des Verteilungsabschnitts (3) verläuft, und sich in einer vertikalen Richtung entlang des äußeren Randabschnitts (3e) des Verteilungsabschnitts (3) erstrecken und das gewogene Objekt, das von dem Verteilungsabschnitt (3) abgelassen wurde, befördern; und
einen Führungsring (9), der eine Vielzahl von Führungsblöcken (90) aufweist, die auf eine radiale Weise von der zentralen Achse entlang der äußeren Randabschnitte (3e) des Verteilungsabschnitts (3) angeordnet sind,
wobei der Verteilungsabschnitt (3) mit einem vorstehenden Abschnitt (40) versehen ist, der niedriger als die Förderfläche (3a) in dem äußeren Randabschnitt (3e) der Förderfläche (3a) ist, und
die Vielzahl von Führungsblöcken (90) jeweils ein Endoberfläche aufweisen, die sich entlang der zentralen Achse an einem Endabschnitt des Verteilungsabschnitts (3) erstrecken, und
der vorstehende Abschnitt (40) an einer Position gegenüber der Endoberfläche jeder der Vielzahl von Führungsblöcken (90) vorgesehen ist.

2. Kombinationswiegevorrichtung (1) gemäß Anspruch 1, wobei der vorstehende Abschnitt (40) einen sich erstreckenden Abschnitt (42) beinhaltet, der sich von dem äußeren Randabschnitt (3e) der Förderfläche (3a) nach unten erstreckt, und einen zweiten sich erstreckenden Abschnitt (44), der sich von einem unteren Endabschnitt des ersten sich erstreckenden Abschnitts (42) zu einer Innenseite des Verteilungsabschnitts (3) erstreckt.

3. Kombinationswiegevorrichtung (1) gemäß Anspruch 2, wobei der vorstehende Abschnitt (40) einen Verbindungsabschnitt (46) beinhaltet, der den zweiten sich erstreckenden Abschnitt (44) mit einer Innenfläche (3b) des Verteilungsabschnitts verbindet.

4. Kombinationswiegevorrichtung (1) gemäß einem der Ansprüche 2 oder 3, umfassend ein erstes Abstandsteil (60), das in einer ersten Position gegenüber einer Seitenfläche einer Außenseite des ersten sich erstreckenden Abschnitts (42) angeordnet ist.

5. Kombinationswiegevorrichtung (1) gemäß einem der Ansprüche 2 bis 4, umfassend ein zweites Abstandsteil (62), das in einer Position gegenüber einer unteren Fläche des zweiten sich erstreckenden Abschnitts (44) angeordnet ist, wobei die untere Fläche des zweiten sich erstreckenden Abschnitts (44) und eine obere Fläche des zweiten Abstandsteils (62) sich gegenseitig kontaktieren.

6. Kombinationswiegevorrichtung (1) gemäß Anspruch 3, umfassend ein drittes Abstandsteil (64), das in einer Position gegenüber einer Seitenfläche einer Innenseite des Verbindungsabschnitts (46) angeordnet ist.

7. Kombinationswiegevorrichtung (1) gemäß einem der Ansprüche 1 bis 6, wobei der Verteilungsabschnitt eingerichtet ist, um das gewogene Objekt durch Rotieren zu befördern.

8. Kombinationswiegevorrichtung (1) gemäß einem der Ansprüche 1 bis 7, wobei der Förderabschnitt eingerichtet ist um gewogene Objekte mittels einer Schraube zu befördern, die rotiert.

9. Kombinationswiegevorrichtung (1) gemäß einem der Ansprüche 1 bis 8, ferner eingerichtet, um für gewogene Objekte verwendet zu verwenden, die ein Haftvermögen aufweisen.

## Revendications

1. Un appareil de pesage combiné (1), comprenant :
une partie de distribution (3) avec un côté supérieur et un côté inférieur, qui comprend une face de transport (3a) du côté supérieur de la partie de distribution (3) qui transporte un objet pesé dans une direction allant vers une partie de bord externe (3e) de la face de transport (3a) ;
une pluralité de parties de transport (5) agencées d'une manière radiale à partir d'un axe central (A) passant par un centre de la partie de distribution (3) et s'étendant dans une direction verticale le long de la partie de bord externe (3e) de la partie de distribution (3) et véhiculent l'objet pesé évacué de la partie de distribution (3) ; et
un anneau de guidage (9) possédant une pluralité de blocs de guidage (90) agencés d'une manière radiale à partir de l'axe central (A) le long de la partie de bord externe (3e) de la partie de distribution (3),
dans lequel la partie de distribution (3) est pourvue d'une partie proéminente (40) plus basse que la face de transport (3a) dans la partie de bord externe (3e) de la face de transport (3a), et
la pluralité de blocs de guidage (90) présente pour chacun une surface d'extrémité s'étendant le long de l'axe central à l'endroit d'une partie d'extrémité de la partie de distribution (3), et
la partie proéminente (40) est agencée en une position opposée à la surface d'extrémité de chacun de la pluralité des blocs de guidage (90).

2. L'appareil de pesage combiné (1) selon la revendication 1, dans lequel la partie proéminente (40) comprend une première partie d'extension (42) qui s'étend vers le bas à partir de la partie de bord externe (3e) de la face de transport (3a) et une seconde partie d'extension (44) qui s'étend à partir d'une partie d'extrémité inférieure de la première partie d'extension (42) vers un intérieur de la partie de distribution (3).

3. L'appareil de pesage combiné (1) selon la revendication 2, dans lequel la partie proéminente (40) comprend une partie de liaison (46) qui relie la seconde partie d'extension (44) à une face intérieure (3b) de la partie de distribution (3).

4. L'appareil de pesage combiné (1) selon la revendication 2 ou 3, comprenant une première pièce d'entretoise (60) agencée en une position opposée à une face latérale d'un extérieur de la première partie d'extension (42).

5. L'appareil de pesage combiné (1) selon l'une des revendications 2 à 4, comprenant une seconde pièce d'entretoise (62) agencée dans une position opposée à une face inférieure de la seconde partie d'extension (44), la face inférieure de la seconde partie d'extension (44) et une face supérieure de la seconde pièce d'entretoise (62) étant en contact l'une avec l'autre.

6. L'appareil de pesage combiné (1) selon la revendication 3, comprenant une troisième pièce d'entretoise (64) agencée en une position opposée à une face latérale d'un intérieur de la partie de liaison (46).

7. L'appareil de pesage combiné (1) selon l'une des revendications 1 à 6, dans lequel la partie de distribution est configurée pour transporter par rotation l'objet pesé.

8. L'appareil de pesage combiné (1) selon l'une des revendications 1 à 7, dans lequel la partie de transport est configurée pour transporter par une vis qui tourne l'objet pesé.

9. L'appareil de pesage combiné (1) selon l'une des revendications 1 à 8, en outre configuré pour être utilisé avec des objets pesés qui présentent un caractère adhérent.
